# EUROPEAN PATENT APPLICATION

(11) **EP 2 549 129 A1**
(43) Date of publication of application: **23.01.2013**
(21) Application number: 12172650.9
(22) Date of filing: 19.06.2012
(51) Int. Cl.: F16B 37/08, F16B 39/284

(54) **Fastening element for securing to a stud**

(30) Priority: 21.07.2011 DE 102011108160
(71) Applicant: Newfrey LLC, Newark, Delaware 19711 (US)
(72) Inventor: Seng, Hans-Peter, 35394 Giessen (DE); Hahn, Ernst-Ludwig, 35394 Giessen (DE)
(74) Representative: Witte, Weller & Partner

(57) **Abstract**

Fastening element (10) for securing to a stud (12) which protrudes from a workpiece (14), having a stud receptacle (24) which extends along a longitudinal axis (19) and is configured to receive a shank (18) of the stud (12), wherein the stud receptacle (24) has a first circumferential portion (26) and a second circumferential portion (28), wherein the first circumferential portion (26) is substantially not radially deflectable in the radial direction and wherein the second circumferential portion (28) is configured to be elastically deflectable in the radial direction, such that a stud shank (18) introduced into the stud receptacle (24) is pressed in the radial direction against the first circumferential portion (26) by the second circumferential portion (28). (Fig. 1)

## Description

The present invention relates to a fastening element for securing to a stud which protrudes from a workpiece, having a stud receptacle which extends along a longitudinal axis and is configured to receive a shank of the stud.

Fastening elements of this kind are known in particular in the form of fastening clips made of a plastics material. It is also known to join studs to workpiece surfaces, for example by what is known as stud welding, by adhesively bonding studs to workpiece surfaces, by thermoplastic welding methods, etc. The fastening clips are attached to the studs joined in this manner to the workpiece and serve as a rule to fix articles in relation to the workpiece. The fastening elements can in this case have fastening portions, to which such articles can be secured. The articles to be fastened may be for example electrical cables, flexible tubes or other elongate articles. However, the articles to be fastened can also be planar articles such as trim elements or the like.

Fastening systems of this kind, in which studs are joined to workpieces, and in which fastening elements, by means of which articles can be fixed in relation to the workpiece, are subsequently secured to the studs, are used extensively in the field of motor vehicle body construction.

The studs preferably have a shank portion, which is provided with an external thread. The fastening elements are then screwed in one embodiment onto the studs.

Alternatively, it is known to provide on the fastening elements opposing, radially elastically deflectable fastening fingers, which project into a stud receptacle in order to introduce a stud shank. The stud fingers are then radially deflected when the fastening element is pushed on axially and engage in an end position behind turns of the external thread of the shank. A problem with this kind of securing of the fastening element to the stud shank is that the relative position between the fastening element and the shank and the stability of the fastening element on the stud are determined substantially by the radially elastic fastening fingers. Furthermore, it is difficult to adapt the radial elasticity of the fastening fingers to stud shanks of different diameters.

Against this background, it is an object of the invention to specify an improved fastening element for securing to a shank, with which improved positional and dimensional stabilization can be achieved.

This object is achieved by a fastening element for securing to a shank of the type mentioned at the beginning, wherein the stud receptacle has a first circumferential portion and a second circumferential portion, wherein the first circumferential portion is substantially not radially deflectable in the radial direction and wherein the second circumferential portion is configured to be elastically deflectable in the radial direction, such that a stud introduced into the stud receptacle is pressed in the radial direction against the first circumferential portion by the second circumferential portion.

On account of this measure, the relative position between the fastening element and the stud can be fixed more precisely. Since the stud is pressed by means of the second circumferential portion against the substantially not radially deflectable first circumferential portion, this relative position is determined generally by the abutment position of the stud shank against the first circumferential portion. As a result, fixing in the radial plane can be achieved. With a suitable configuration of the circumferential portions, axial fixing can also take place.

The circumferential portions can be configured in the longitudinal direction such that they extend substantially along the entire length of the stud shank. However, it is equally possible to configure the circumferential portions in the longitudinal direction such that they extend only along a portion of the stud shank.

The fastening element is preferably produced from plastic. It is particularly preferred for the fastening element to be produced in one piece by injection moulding. It is particularly preferred for the fastening element to be able to be produced without a slide.

The fastening element is preferably configured to receive studs having an external thread, in particular studs having what is known as a coarse thread. It is further particularly preferred for the fastening element to be connected to the stud in that the fastening element is pushed in the axial direction onto the stud, that is to say in particular not screwed on.

The stud can be produced in particular from metal but can also be produced from plastic.

The above object is also achieved overall by a fastening system having a fastening element according to the invention and a stud that can be joined to a workpiece and has in particular an external thread.

Thus, the object is achieved in its entirety.

It is particularly preferable for the stud receptacle to be configured in a polygonal manner in cross section and to have at least three sides, wherein the first circumferential portion has at least two of the sides and wherein the second circumferential portion has at least one of the sides.

In the simplest case, the stud receptacle is substantially triangular in cross section, wherein the second circumferential portion, which is formed by the one side, presses the stud shank against the two sides of the first circumferential portion. On account of the polygonal configuration, it is particularly preferable for the stud shank to be contacted by a respective side in only a point-wise or linear manner. In this case, the fastening element can be positioned relative to the stud shank by the abutment of three contact points or lines in a manner distributed over the circumference of the stud shank. As a result, the relative position can be established unambiguously without mechanical overdetermination.

In this case, it is particularly preferable for the radially deflectable side of the stud receptacle to be formed by a radially elastically deflectable crosspiece.

The crosspiece can in this case extend substantially tangentially to an imaginary circular receptacle for the stud. The crosspiece can extend in the longitudinal direction along the entire length of the stud shank. However, it is particularly preferable for the radially elastically deflectable crosspiece to extend only along a relatively short portion of the stud shank length, as seen in the longitudinal direction of the stud shank. This embodiment simplifies the production of the fastening element. In addition, the radial elasticity can be established more easily thereby.

In this case, it is particularly advantageous for the crosspiece to be configured in a curved manner.

Generally, the crosspiece can be configured in a straight manner, but is preferably configured in a curved manner in the radially not deflected position. In this case, the curve can either be configured to be continuous or can be formed by a plurality of at least two straight-line portions. In other words, the curve of the crosspiece can also be configured as a V-shape by two crosspiece portions or as a polygonal shape by a plurality of crosspiece portions.

As a result, the radial elasticity can be established particularly well.

In this case, it is particularly advantageous for the crosspiece to be curved radially inwards.

As a result, it is possible, even in the case of relatively thin crosspieces, to achieve relatively high elastic restoring forces with respect to a radially elastic deflection, and this allows the fastening element to be fixed particularly well to the stud shank.

Furthermore, it is advantageous overall for the crosspiece to have two crosspiece portions which are oriented at a crosspiece angle of less than 180° with respect to one another.

In this embodiment, the curve of the crosspiece is consequently formed by two substantially straight-line crosspiece portions which are oriented at a crosspiece angle of less than 180° with respect to one another. The crosspiece angle is preferably in the range of from 175° to 120°.

According to a further embodiment which is preferred overall, two sides, opposite the elastically deflectable side, of the first circumferential portion of the stud receptacle are oriented at a side angle of less than 120° with respect to one another.

The two sides which are oriented at this side angle with respect to one another consequently form a V-shape, into which the stud shank can be pressed radially.

Preferably, the side angle is greater than 70°.

Furthermore, it is advantageous overall for at least one nose or channel that protrudes radially inwards to be arranged on the first circumferential portion and/or on the second circumferential portion.

On account of such a nose or channel, a form fit can be achieved between the stud shank and the fastening element in the longitudinal direction. In this case, the noses preferably engage into turns of a coarse thread of the stud shank. However, as an alternative, it is also possible for the noses to engage in circumferential grooves on the stud shank.

According to a further preferred embodiment, in this case the nose of the second circumferential portion is arranged, as seen in the longitudinal direction, closer to the introduction opening in the stud receptacle than the nose of the first circumferential portion.

As a result, the relative position between the fastening element and the stud shank can be fixed even better. The noses are thus preferably adapted to the pitch. Thus, it can be ensured that all the noses are always latched in the pitch so that relatively high pull-off forces from the stud can be achieved.

Furthermore, it is advantageous for tongues to be provided on an underside of the fastening element, said tongues being configured to be supported in an axially elastic manner on a surface of the workpiece and/or of a stud shank. As a result, when noses of the circumferential portions engage in radial depressions in the stud shank, defined, play-free mounting in the axial direction can be achieved.

It is furthermore preferred for a fastening portion to be provided on the fastening element, it being possible to secure an article, for example an electrical cable, a pipeline, etc., on said fastening portion. However, the fastening portion can also be configured to secure an article to a workpiece in a direction parallel to a workpiece surface, for example in the form of a trim part or the like.

It goes without saying that the abovementioned features and those yet to be explained below can be used not only in the combination given in each case but also in other combinations or on their own, without departing from the scope of the present invention.

Exemplary embodiments of the invention are explained in more detail in the following description and are illustrated in the drawing, in which:
- Fig. 1: shows a schematic cross-sectional view through a first embodiment of a fastening element according to the invention;
- Fig. 2: shows a sectional view along the line II-II in Fig. 1, wherein the fastening element is secured to a stud shank;
- Fig. 3: shows a perspective view of a further embodiment of a fastening element according to the invention;
- Fig. 4: shows a plan view of the fastening element from Fig. 3;
- Fig. 5: shows a sectional view on the line V-V in Fig. 4; and
- Fig. 6: shows a sectional view along the line VI-VI in Fig. 4.

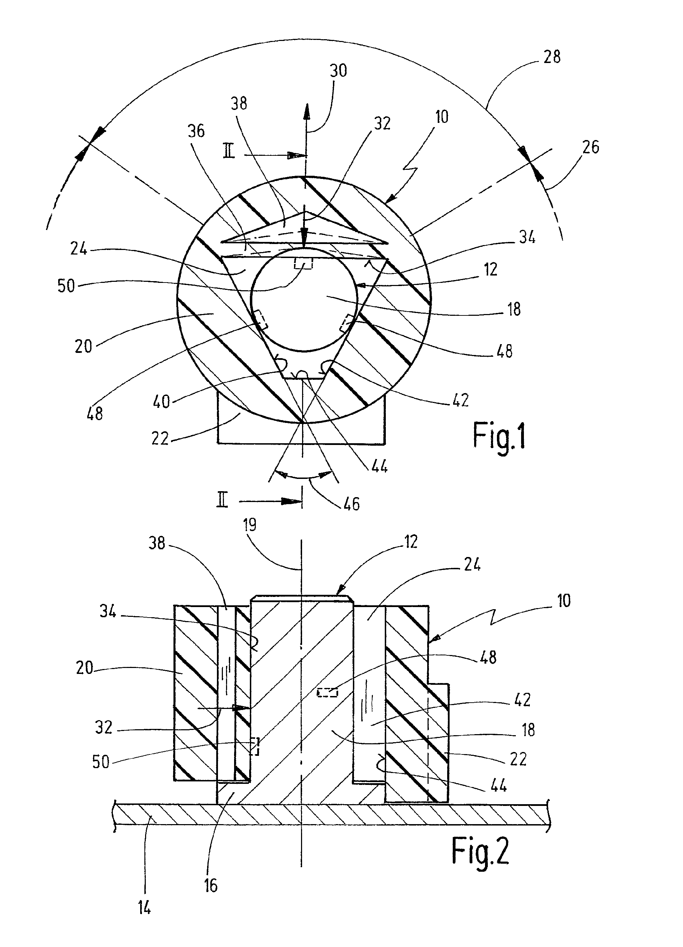

Figs. 1 and 2 schematically illustrate a first embodiment of a fastening element according to the invention, having the overall designation 10.

The fastening element 10 is formed as an injection-moulded plastics element, which is designed to be pushed in the axial direction onto a stud 12. The stud 12 is secured to a workpiece 14. Preferably, the stud 12 is joined to a surface of the workpiece 14, for example by a stud welding process, by stud adhesive bonding or the like.

The stud 12 has a stud flange 16, which is joined in a substantially planar manner to the surface of the workpiece 14, and a stud shank 18, which extends therefrom and is oriented on a longitudinal axis 19 which extends in a substantially perpendicular manner from the surface of the workpiece 14.

The fastening element 10 has an elongate basic body 20, on the outer circumference of which there is formed a fastening portion 22. The fastening portion 22 is indicated only schematically in the present case and can assume a wide variety of shapes, depending on the type of article to be secured to the workpiece 14 by means of the fastening element 10.

Formed on the basic body 20 is a stud receptacle 24, which extends likewise along the longitudinal axis 19. The stud receptacle is designed to at least partly receive the shank 18 of the stud 12. The stud receptacle 24 has in the circumferential direction a first circumferential portion 26, which extends preferably over more than 180°, in particular more than 220° and in the present case over about 250°, and also a second circumferential portion 28, which extends over the rest of the circumference of the stud receptacle 24 (in the present case about 110°).

The second circumferential portion 28 of the stud receptacle 24 is configured to be elastically deflectable in the radial direction, as is indicated schematically by an arrow 30. When a stud shank 18 has been introduced into the stud receptacle 24 and the second circumferential portion 28 has been deflected in the radial direction, the second circumferential portion 28 exerts, counter to the deflection direction, an elastic restoring force in the radial direction on the stud shank 18, as is shown in Fig. 1 at 32.

By means of the elastic pressing force 32, the stud shank 18 is pressed from the first circumferential portion 26 in the radial direction towards the second circumferential portion 28 and as a result is fixed in the radial direction or in the radial plane.

Furthermore, the stud receptacle 24 is configured in the present case in a polygonal manner in cross section, and so the stud receptacle 24 has the form of a prism. In the embodiment in Figs. 1 and 2, the stud receptacle contains a first side 34, which forms the second circumferential portion 28. The first side 34 is formed in this case by a crosspiece 36 which is oriented approximately tangentially to the circumference of the shank portion 18 and, in the event of a radial deflection 30, can yield into a cavity 38 provided in the basic body 20 in the radial direction behind the crosspiece 36.

As illustrated in Fig. 2, the crosspiece 36 can be substantially continuous in the axial direction, but it can also extend only along a part of the axial length of the shank portion 18.

The stud receptacle 24 further contains a second side 40 and a third side 42, which run towards one another from opposite ends of the first side 34 and lead to a fourth side 44, which is opposite the first side 34. The second side 40 and the third side 42 in this case enclose a side angle 46, which in the embodiment illustrated is about 55° and lies preferably in a range of from 40° to 120°. The second and the third side 40, 42 can also lead directly to one another so that no fourth side 44 is provided and the polygonal cross section of the stud receptacle 24 is not trapezoidal but triangular. Generally, it is possible to configure the stud receptacle 24 with even more than four sides.

By means of the pressing force 32, the stud shank 18 is pressed against the second side 40 and against the third side 42, in order to achieve fixing in the radial plane.

On its inner circumference, the stud receptacle 24 can be configured in a smooth manner. The stud 18 can for example have a self-tapping thread, in which case the fastening element 10 is screwed onto the stud 18. Alternatively, the stud receptacle 24 can have an internal thread on its inner circumference. In this case, too, the stud 12 and the fastening element 10 are connected by screwing.

However, provided in the present case on the second side 40 and on the third side 42 are in each case first noses 48, which protrude in the radial direction from the respective sides. Furthermore, a second nose 50 is formed on the first side 34. The stud shank 18 has a coarse thread, which is not illustrated in more detail.

In this embodiment, the fastening element 10 can be pushed in the axial direction onto the stud shank 18. On account of the radial elasticity of the crosspiece 36, the latter can be deflected in the radial direction during this insertion process, as is illustrated by dashed lines in Fig. 1. In this case, the noses 48, 50 rest via the thread against the outer circumference of the shank 18 and finally latch in threaded grooves on the shank 18 in the end position shown in Fig. 2.

By means of this embodiment, the fastening element 10 can also be fixed in the axial direction to the stud 12 in a force-fitting and/or form-fitting manner.

In the embodiment in Figs. 1 and 2, the crosspiece 36 can also be configured in an intrinsically curved manner. In this case, the crosspiece can be curved radially outwards or radially inwards. The curve can be established by a continuous bend, but can also be formed by at least two crosspiece portions which are oriented at an angle with respect to one another.

In the embodiment in Figs. 1 and 2, the second nose 50 is arranged closer to an introduction opening, which is not indicated in more detail, of the stud receptacle 24 than the first noses 48. However, the first and the second noses 48, 50 can also be arranged at the same axial height.

The fastening element 10 can be fastened to a stud which has previously been joined to a workpiece 14, with an article to be fastened being secured beforehand to the fastening element 10. Alternatively, it is possible to fasten such an article to the fastening element 10 once the fastening element 10 has been secured to the stud 12.

It is also possible to disassemble the fastening element 10 if a tool is used to deflect the crosspiece 36 in the deflection direction 30 in order to remove the force fit or form fit between the stud shank 18 and the fastening element 10 in the axial direction.

While the first side 34 is elastically deflectable in the radial direction, the second side 40 and the third side 42 are rigid, or not elastically deflectable, in the radial direction.

On account of the radial deflectability of the crosspiece 36, it is possible for the fastening receptacle 24 to receive stud shanks 18 which have different diameters.

The fastening element 10 is preferably made of plastic and is produced in particular in an injection-moulding process. On account of the particular configuration, the fastening element 10 can be manufactured without a slide. It goes without saying that the stud receptacle schematically illustrated in Figs. 1 and 2 can be combined with fastening elements 10 of different kinds, for example in order to secure elongate articles such as cables, pipes etc. Alternatively, it is also possible to realize other kinds of fastening portions 22 on the basic body 20. Generally, it is also conceivable to fix a trim element or the like, which is to be fitted parallel to the surface of the workpiece 14, by means of such a fastening element 10.

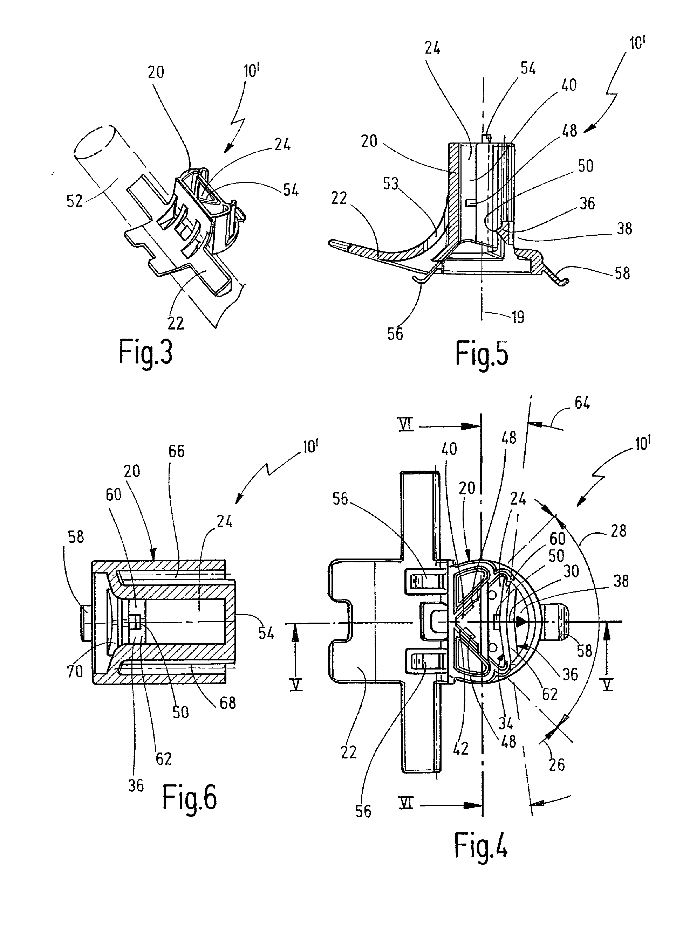

Figs. 3 to 6 illustrate a further embodiment of a fastening element 10', which corresponds generally in terms of structure and functioning to the fastening element 10 shown in Figs. 1 and 2. Therefore, identical elements are designated by the same reference numbers. In the following text, primarily the differences are explained.

The fastening element 10' shown in Figs. 3 to 6 has on one side of the basic body a fastening portion 22, which is configured by way of example for the securing of an elongate article 52. In this case, the fastening portion 22 contains for example a cutout for passing through a cable tie or the like, as is shown at 53 in Fig. 5.

Formed at the upper end of the basic body 20 is a stopping crosspiece 54, which extends transversely across the stud receptacle 24 and forms a stop for a stud shank 18 to be introduced.

Provided on the underside of the basic body 20 are first tongues 56, which are arranged on one side of the stud receptacle 24 and are configured to be elastically deflected in the axial direction. Provided on the side opposite the stud receptacle 24 is at least one second tongue 58, which is axially elastically deflectable in the same way.

In a final mounting position, which is not illustrated, the tongues 56, 58 rest on a surface of the workpiece 14 and ensure that the engagement of the noses 48, 50 in thread furrows in the stud shank 18 is placed under tension.

Furthermore, the crosspiece 36 is formed by a crosspiece which does not extend along the entire length of the shank in the axial direction. In this case, the crosspiece 36 is formed by a first crosspiece portion 60 and a second crosspiece portion 62, which are oriented at a crosspiece angle 64 with respect to one another so that the crosspiece 36 is configured in a curved manner. The crosspiece angle is less than 180° and preferably greater than 90°, in particular greater than 120°.

The crosspiece portions 60, 62 are in this case oriented such that the crosspiece 36 is curved radially inwards as a whole.

As a result, relatively large elastic pressing forces 32 can be realized, even when the crosspiece 36 is deflected only slightly in the radial direction.

In order to simplify production and to avoid large accumulations of material, the basic body 20 is configured with two axial depressions 66, 68, which run parallel to the stud receptacle 24 and are arranged outside the second side 40 and the third side 42, respectively, in the radial direction. However, the longitudinal walls that form thereby the second side 40 and the third side 42 are configured to be relatively thick in the radial direction, so that they are substantially not elastically deflectable in the radial direction.

Furthermore, Fig. 6 schematically illustrates at 70 an introduction opening in the stud receptacle 64.

## Claims

1. Fastening element (10) for securing to a stud (12) which protrudes from a workpiece (14), having a stud receptacle (24) which extends along a longitudinal axis (19) and is configured to receive a shank (18) of the stud (12), wherein the stud receptacle (24) has a first circumferential portion (26) and a second circumferential portion (28), wherein the first circumferential portion (26) is substantially not radially deflectable in the radial direction and wherein the second circumferential portion (28) is configured to be elastically deflectable in the radial direction, such that a stud shank (18) introduced into the stud receptacle (24) is pressed in the radial direction against the first circumferential portion (26) by the second circumferential portion (28).

2. Fastening element according to Claim 1, wherein the stud receptacle (24) is configured in a polygonal manner in cross section and has at least three sides (34, 40, 42), wherein the first circumferential portion (26) has at least two (40, 42) of the sides and wherein the second circumferential portion (28) has at least one (34) of the sides.

3. Fastening element according to Claim 2, wherein the radially deflectable side (34) of the stud receptacle (24) is formed by a radially elastically deflectable crosspiece (36).

4. Fastening element according to Claim 3, wherein the crosspiece (36) is configured in a curved manner.

5. Fastening element according to Claim 4, wherein the crosspiece (36) is curved radially inwards.

6. Fastening element according to one of Claims 3-5, wherein the crosspiece (36) has two crosspiece portions which are oriented at a crosspiece angle (64) of less than 180° with respect to one another.

7. Fastening element according to one of Claims 2-6, wherein two sides (40, 42), opposite the elastically deflectable side (34), of the first circumferential portion (26) of the stud receptacle (24) are oriented at a side angle (46) of less than 120° with respect to one another.

8. Fastening element according to one of Claims 1-7, wherein at least one nose (48, 50) that protrudes radially inwards is arranged on the first circumferential portion (26) and/or on the second circumferential portion (28).

9. Fastening element according to Claim 8, wherein the nose (50) of the second circumferential portion (28) is arranged in the longitudinal direction closer to the introduction opening (70) in the stud receptacle (24) than the nose (48) of the first circumferential portion (26).

10. Fastening element according to one of Claims 1-9, having a fastening portion (22) to which an article (52) can be secured.
